# EUROPÄISCHE PATENTSCHRIFT

(11) **EP 1 360 216 B1**
(45) Veröffentlichungstag und Bekanntmachung des Hinweises auf die Patenterteilung: **26.10.2005**
(21) Anmeldenummer: 01999590.1
(22) Anmeldetag: 01.12.2001
(51) Int. Cl.: C08F 291/00, C08F 257/02, H01B 3/44

(54) **PRÄPOLYMER UND DARAUS HERGESTELLTES DIELEKTRISCHES MATERIAL**
PREPOLYMER AND DIELECTRIC MATERIAL PRODUCED THEREFROM
PREPOLYMERE ET MATERIAU DIELECTRIQUE REALISE A PARTIR DE CELUI-CI

(30) Priorität: 06.12.2000 DE 10060571
(43) Veröffentlichungstag der Anmeldung: 12.11.2003
(73) Patentinhaber: ROBERT BOSCH GMBH, 70442 Stuttgart (DE)
(72) Erfinder: AICHELE, Wilfried, 71364 Winnenden (DE); SCHEYING, Gerd, 70186 Stuttgart (DE); MUELLER, Lutz, 72631 Aichtal (DE); ROESCH, Oliver, 70567 Stuttgart (DE); MUNK, Marco, 73773 Aichwald-Ainchschiess (DE)
(86) Internationale Anmeldenummer: PCT/DE2001/004514
(87) Internationale Veröffentlichungsnummer: WO 2002/046256

(56) Entgegenhaltungen:
- EP-A- 0 357 063
- EP-A- 0 430 073
- US-A- 3 929 490
- US-A- 3 929 935
- US-A- 5 107 364

## Beschreibung

### Stand der Technik

Die Erfindung betrifft ein Präpolymer und daraus hergestellte dielektrische Materialien insbesondere für Mehrlagenschaltungen.

Mikrowellenschaltungen, insbesondere Mehrlagenschaltungen, aus mit einer Metallisierung versehenen verlustarmen Dielektrikas sind bekannt. Die Dielektrika basieren entweder auf Teflon, beispielsweise auf einem unter der Bezeichnung RT/duroid® 6002 von der Rogers Corp. Chandler, AZ, USA erhältlichen Produkt, oder auf Polyparaxylen (erhältlich unter der Bezeichnung Parylen N), Monochlorpolyparaxylen (Parylen C), Dichlorpolyparaxylen (Parylen D) und Perfluor-p-xylylen (ein Produkt der Union Carbide Corp.), die im Vergleich zu Teflon eine höhere Wärmeformbeständigkeit haben.

In Hochfrequenzkondensatoren wird als feuchtestabiles Dielektrikum Polystyrol in Folienform angewandt. Polystyrol ist ein thermoplasti-scher (schmelzbarer) Kunststoff. Bekannt sind auch polymerisierbare Gießharze aus in Styrol gelöstem Polystyrol. Bei unzureichender Wärmeformbeständigkeit von Polystyrol kann diese durch Copolymerisation von Styrol mit linear polymerisierenden Monomeren wie α-Methylstyrol verbessert werden. Die entstehenden Copolymeren sind Thermoplaste. Eine weitere Möglichkeit, um die Wärmeformbeständigkeit zu verbessern, besteht in der Vernetzung von Styrol oder Styrolderivaten mit vernetzenden Comonomeren, wie Divinylbenzol. Dabei entstehen duroplastische Styrol-Copolymere, die beispielsweise als Ionenaustauscherharz eingesetzt werden.

Die Strukturierung von UV-aushärtbaren Gießharzen mittels Photolithographie ist eine bekannte Technik. Dabei wird eine Oberfläche durch Aufschleudern mit einem flüssigen oder in einem Lösungsmittel gelösten Harz beschichtet, wird gegebenenfalls das Lösungsmittel abgelüftet, wird die Beschichtung durch eine Maske belichtet und werden die unbelichteten Bereiche der Harzschicht mit einem Lösungsmittel entfernt.

### Die Erfindung und ihre Vorteile

Es ist die Aufgabe der Erfindung, ein strukturierbares Präpolymer und ein daraus herstellbares, wärmeformbeständiges, feuchteunempfindliches und verlustarmes, dielektrisches polymeres Material mit niedrigem Verlustfaktor tanδ ,insbesondere für Hochfrequenz- und Mikrowellenschaltungen, bereitzustellen.

Diese Aufgabe wird mit einem Präpolymer der eingangs genannten Art mit den Merkmalen des kennzeichnenden Teils des Anspruchs 1 und mit einem dielektrischen Material der eingangs genannten Art mit den Merkmalen des Anspruchs 19 gelöst. Unter einem Präpolymer ist die Vorstufe eines Polymers zu verstehen.

Die aus dem erfindungsgemäßen Präpolymer erzeugten erfindungsgemäßen dielektrischen Materialien dämpfen elektromechanische Wellen, auch solche im Hochfrequenz- und Mikrowellenbereich, wenig, wodurch ein energetisch günstiger Transport von Hochfrequenzenergie erfolgen kann. Deshalb wird das dielektrische Material von den durchgehenden elektromagnetischen Wellen nicht erwärmt. Das erfindungsgemäße Pröpolymer ist - vorzugsweise mit UV-Licht - photostrukturierbar. Daher können Löcher für Durchkontaktierungen in einfacher Weise erzeugt werden, weshalb die erfindungsgemäßen dielektrischen Materialien insbesondere vorteilhaft in Mehrlagenschaltungen einsetzbar sind, oder es können Schaltungen hergestellt werden, die nur in bestimmten Bereichen ein Dielektrikum aufweisen. Der Photoinitiator muß dabei nur in Mengen zugesetzt werden (bevorzugt - bezogen auf das Gesamtgewicht des Präpolymers - zwischen etwa 0,1 und etwa 5 Gew.-%), welche die Dämpfung der elektromagnetischen Wellen nicht beachtlich vergrößern.

Um ein besonders verlustarmes Polymer zu erzeugen, ist es günstig, wenn das linear polymerisierende Monomer Styrol ist.

Zur Veringerung des Dampfdrucks des Präpolymers und/oder zur Erhöhung der Wärmeformbeständigkeit des erzeugten dielektrischen Materials ist es vorteilhaft, wenn das Styrol ganz oder teilweise mindestens durch ein linear polymerisierendes Monomer aus der Gruppe α-Methylstyrol, o-, p- und m-Vinyltoluol, Mischung aus cis- und trans-Stilben, α- und β-Pinen, Inden, o-, p- und m-Methoxystyrol und o-, p- und m-Ethylstyrol ersetzt ist. Die aus solchen Präpolymeren erzeugten Polymere sind erheblich temperaturstabiler als beispielsweise normales homopolymeres Polystyrol, das eine Glasübergangstemperatur von ca. + 100°C hat. Die höhere Wärmeformbeständigkeit hat keinen Einfluß auf die Energieverluste.

Es ist vorteilhaft, wenn der Photoinitiator ein Initiator für die radikalische Polymerisation, bevorzugt Darocur® 1173 oder Irgacure® 369, ist.

Zur Erhöhung der Wärmeformbeständigkeit des herzustellenden Dielektrikums trägt in vorteilhafter Weise auch mindestens ein vernetzend polymerisierendes Monomer im Präpolymer bei, ohne daß deshalb größere dielektrische Verluste als bei Polystyrol auftreten. Besonders vorteilhaft ist als vernetzend polymerisierendes Monomer mindestens ein Material aus der Gruppe Divinylbenzol, Methylcyclopentadien, Norborna-2,5-dien, Inden, α-, β- und γ-Terpinen, Dipenten und Dicyclopentadien. Die dabei erzeugten, vernetzten, einheitlichen Copolymere sind Duroplaste.

Zur Erhöhung der Lagerstabilität des Präpolymers ist es günstig, wenn das Präpolymer einen Stabilisator enthält.

Zur Einstellung einer gewünschten Viskosität ist es vorteilhaft, wenn das Präpolymer ein Lösungsmittel, wie Butylacetat, enthält.

Es ist vorteilhaft, wenn in dem Präpolymer ein Polymer, bevorzugt thermoplastisches Polystyrol oder ein Indenharz, als Filmbildner gelöst ist.

Zur Verbesserung der chemischen und thermischen Stabilität und zur weiteren Verbesserung der dielektrischen Eigenschaften des zu erzeugenden dielektrischen Materials ist es vorteilhaft, wenn in den Monomeren und gegebenenfalls in dem Polymer die Wasserstoffatome ganz oder teilweise durch Fluoratome ersetzt sind.

Um die Dielektrizitätskonstante des erfindungsgemäßen dielektrischen Materials variieren zu können, ist es vorteilhaft, wenn das erfindungsgemäße Präpolymer einen Füller aus anorganischen Partikeln, bevorzugt hydrophobes TiO₂, enthält.

Ein im Hochfrequenz- und Mikrowellenbereich sehr verlustarmes und bei entsprechender Zusammensetzung sehr wärmeformbeständiges Dielektrikum wird erhalten, wenn das Präpolymer bezogen auf sein Gesamtgewicht etwa 5 bis etwa 95 Gew.-% mindestens eines der genannten linear polymerisierenden Monomere, etwa 0 bis etwa 50 Gew.-% mindestens eines der genannten vernetzenden Monomere, etwa 0 bis etwa 50 Gew.-% eines der genannten Polymere und < etwa 5 Gew.-% eines der genannten Photoinitiatoren enthält.

Ein besonders dichtes dielektrisches Material wird in vorteilhafter Weise erhalten, wenn gegebenenfalls in dem Präpolymer vorhandenes Lösungsmittel vor der Polymerisation entfernt worden ist.

Das erfindungsgemäße dielektrische Material läßt sich vorteilhaft in Hochfrequenz- und Mikrowellenschaltungen und besonders vorteilhaft in mehrlagigen Hochfrequenz- und Mikrowellenschaltungen verwenden.

Weitere vorteilhafte Ausgestaltungen des erfindungsgemäßen Präpolymers sind in den Unteransprüchen aufgeführt.

Im folgenden wird die Erfindung anhand von Ausführungsbeispielen detailliert beschrieben. Es sei aber klargestellt, daß sich zwar die Erfindung anhand dieser Beispiele besonders anschaulich erläutern läßt, daß aber von ihnen im Rahmen der Ansprüche mannigfaltige Abweichungen möglich sind.

Generell enthält das erfindungsgemäße Präpolymer, aus dem das erfindungsgemäße dielektrische Material hergestellt wird, mindestens ein Monomer, einen Photoinitiator und gegebenenfalls - zur Erzielung bestimmter Eigenschaften - noch weitere Zusätze (s.u.). Die Monomeren sind ausschließlich solche, welche durch Polymerisation makromolekulare Ketten oder Netzwerke bilden.

An sich ist bereits das durch Polymerisation des linear polymerisierenden Styrols erzeugte Homopolymer feuchteunempfindlich und außerordentlich verlustarm, aber das nur Styrol (Sdp. 145°C) als Monomer enthaltende Präpolymer hat einen relativ hohen Dampfdruck und die Temperaturstabilität des Polystyrols ist für viele Anwendungen nicht ausreichend, da es nur eine Glasübergangstemperatur von etwa + 100°C hat. Um ein temperaturstabileres Polymer zu erzeugen, dessen dielektrische Verluste nicht höher sind als die von Polystyrol, gibt es verschiedene Möglichkeiten.

Man kann das Styrol ganz oder teilweise durch mindestens ein linear polymerisierendes Monomer ersetzen, das (die) einen höheren Siedepunkt wie Styrol hat (haben). Solche Monomere sind insbesondere aus der Gruppe α-Methylstyrol (Sdp. 165°C), o-, p- und m-Vinyltoluol (Sdp. 172°C), Mischung aus cis- und trans-Stilben (Sdp. 306 - 307°C, trans-Stilbenanteil 0 bis 100 Gew.-%), α- und β-Pinen (Sdp. 155°C), Inden (Sdp. 182°C), o-, p- und m-Methoxystyrol (Sdp. der p-Verb. 204°C) und o-, p- und m-Ethylstyrol (Sdp. > 120°C) ausgewählt. Dadurch läßt sich der Dampfdruck des Präpolymers erniedrigen. Unabhängig von seinem Dampfdruck läßt sich durch die Wahl eines geeigneten Monomers die Wärmeformbarkeit des erhaltenen Thermoplasten erhöhen.

Man kann zusätzlich zu dem linear polymerisierenden Monomeren bzw. den linear polymerisierenden Monomeren mindestens ein vernetzendes Monomer zusetzen. Zu diesen vernetzenden Monomeren gehören insbesondere Materialien aus der Gruppe Divinylbenzol (Sdp. 200°C), Methylcyclopentadien (Sdp. 98°C bei 40 hPa), Norborna-2,5-dien (Sdp. 89°C), Inden (Sdp. 182 °C), α- und β-Terpinen (Sdp. 174°C), γ-Terpinen (Sdp. 183°C), Dipenten (Sdp. 178 °C) und Dicyclopentadien (Sdp. 98°C bei 54 hPa), wobei Divinylbenzol wegen seines hohen Siedepunkts besonders bevorzugt ist. Der bei der Polymerisation erzeugte Duroplast hat eine noch höhere Wärmeformbarkeit, als wenn nur linear polymerisierende Monomere verwendet werden.

Als Photoinitiator wird dem Präpolymer bevorzugt ein radikalischer Initiator, besonders bevorzugt Darocur® 1173 oder Irgacure® 369, in auf das Gesamtgewicht des Präpolymers bezogenen Mengen von etwa 0,1 bis etwa 5 Gew.-% zugemischt. Darocur® 1173 und Irgacure® 369 bestehen aus 2-Hydroxy-2-methyl-1-phenyl-1-propanon bzw. 2-Benzyl-2-N,N-dimethylamino-1-(4-morpholinophenyl)-1-butanon und werden von Ciba-Geigy, Basel, CH vermarktet.

Da das Präpolymer photopolymerisierbar und deshalb gezielt strukturierbar ist, läßt es sich sehr vorteilhaft bei der Herstellung der heute üblichen mikroelektronischen Mehrlagenschaltungen, bei denen im Dielektrikum Löcher für Durchkontaktierungen erzeugt werden müssen, oder von Schaltungen einsetzen, die nur in bestimmten Bereichen ein Dielektrikum aufweisen.

Zur Erhöhung der Lagerstabilität kann das Präpolymer einen der üblichen Stabilisatoren, wie einen phenolischen Inhibitor, zur Verhinderung einer vorzeitigen Polymerisation enthalten.

Um die Viskosität des Präpolymers, das beispielsweise durch Aufschleudern aufgebracht wird, auf einen geeigneten Wert einzustellen, kann - sofern erforderlich - der Mischung ein Lösungsmittel, wie Butylacetat, zugesetzt werden.

Damit das Polymer einen zusammenhängenden Film bildet, ist es günstig, wenn das Präpolymer einen Filmbildner enthält. Als Filmbildner kommt in erster Linie thermoplastisches Polystyrol in Frage, welches durch einen in dem Präpolymer ebenfalls löslichen Thermoplast mit höherer Wärmeformbeständigkeit als Polystyrol, wie Indenharze (s. Hans Wagner, Hans Friedrich Sarx "Lackkunstharze", Carl Hanser Verlag, München, ISBN 3-446-10377-6), ganz oder teilweise ersetzt sein kann.

Eine weitere Ausführungsvariante nutzt die Füllung mit anorganischen Patrikeln, wie mit hydrophobem TiO₂, zur Variation der Dielektrizitätskonstanten εᵣ.

Bei allen in dem Präpolymer eingesetzten Monomeren und Polymeren kann es sich auch um Produkte handeln, bei denen alle oder ein Teil der Wasserstoffatome durch Fluoratome ersetzt sind, wie beispielsweise in Pentafluorstyrol.

Zur Herstellung des Dielektrikums wird das Präpolymer, das eine viskose Lösung bildet, in bekannter Weise, beispielsweise durch Aufschleudern auf ein Substrat, beispielsweise ein Leiterplattensubstrat, einen Halbleiterwafer oder ein Keramiksubstrat, aufgebracht. Zur Polymerisation wird die aufgebrachte Schicht mit UV-Licht bestrahlt. Soll die Schicht strukturiert werden, wird das UV-Licht selektiv, beispielsweise durch eine Maske, abgeschirmt. Durch die Bestrahlung wird die Schicht, gegebenenfalls bereichsweise, gehärtet. Unbelichtete Bereiche werden daraufhin, beispielsweise mit Methylisobutylketon, weggelöst. Anschließend können in bekannter Weise Leiterbahnen aufgebracht werden. Durch ein- oder mehrmaliges Wiederholen der genannten Schritte können Mehrlagenschaltungen aufgebaut werden.

Bei einem bevorzugten Ausführungsbeispiel werden die Bestandteile des Präpolymers homogen zu einer viskosen Lösung zusammengemischt. Die Mischung enthält bezogen auf ihr Gesamtgewicht etwa 5 bis etwa 95 Gew.-% mindestens ein linear polymerisierendes Momomer, etwa 0 bis etwa 50 Gew.-% thermoplastischen Filmbildner, etwa 0 bis etwa 50 Gew.-% mindestens ein vernetzendes Monomer, < etwa 5 Gew.-% Photoinitiator und gegebenenfalls - je nach der Anwendung - weitere Zusätze (s.o.) enthalten. Die Mischungsbestandteile sind aus den o.g. Materialien ausgewählt. Die Polymerisation erfolgt wie oben angegeben. Es entsteht - das Vorhandensein eines vernetzenden Monomers vorausgesetzt - ein dreidimensional vernetzter Duroplast.

Typische Parameter des erzeugten dielektrischen Materials:
Verlustfaktor tanδ = 3·10⁻³ und
Dielektrizitätskonstante εᵣ = 2,35 (bei 40 GHz)

Damit ist gewährleistet, daß das erzeugte Material im Hochfrequenz- und Mikrowellenbereich extrem verlustarm ist.

## Patentansprüche

1. Präpolymer, **dadurch gekennzeichnet, daß** es mindestens ein linear polymerisierendes Monomer und einen Photoinitiator enthält.

2. Präpolymer nach Anspruch 1, **dadurch gekennzeichnet, daß** das linear polymerisierende Monomer Styrol ist.

3. Präpolymer nach Anspruch 2, **dadurch gekennzeichnet, daß** das Styrol ganz oder teilweise durch mindestens ein linear polymerisierendes Monomer aus der Gruppe α-ethylstyrol, o-, p- und m-Vinyltoluol, Mischung aus cis- und trans-Stilben, α- und β-Pinen, Inden, o-, p- und m-Methoxystyrol und o-, p- und m-Ethylstyrol ersetzt ist.

4. Präpolymer nach einem der Ansprüche 1 bis 3, **dadurch gekennzeichnet, daß** der Photoinitiator in auf das Gesamtgewicht des Präpolymers bezogenen Mengen zwischen etwa 0,1 und etwa 5 Gew.-% vorhanden ist.

5. Präpolymer nach einem der Ansprüche 1 bis 4, **dadurch gekennzeichnet, daß** der Photoinitiator ein UV-Initiator ist.

6. Präpolymer nach einem der Ansprüche 1 bis 5, **dadurch gekennzeichnet, daß** der Photoinitiator ein Initiator für die radikalische Polymerisation ist.

7. Präpolymer nach Anspruch 6, **dadurch gekennzeichnet, daß** als Photoinitiator Darocur 1173 oder Irgacure 369 enthalten ist.

8. Präpolymer nach einem der Ansprüche 1 bis 7, **dadurch gekenn** **zeichnet, daß** es mindestens ein vernetzend polymerisierendes Monomer enthält.

9. Präpolymer nach Anspruch 8, **dadurch gekennzeichnet, daß** das vernetzend polymerisierende Monomer mindestens ein Material aus der Gruppe Divinylbenzol, Methylcyclopentadien, Norborna-2,5-dien, Inden, α-, β- und γ-Terpinen, Dipenten und Dicyclopentadien ist.

10. Präpolymer nach einem der Ansprüche 1 bis 9, **dadurch gekennzeichnet, daß** es einen Stabilisator enthält.

11. Präpolymer nach einem der Ansprüche 1 bis 10, **dadurch gekennzeichnet, daß** es ein Lösungsmittel enthält.

12. Präpolymer nach Anspruch 11, **dadurch gekennzeichnet, daß** als Lösungsmittel Butylacetat enthalten ist.

13. Präpolymer nach einem der Ansprüche 1 bis 12, **dadurch gekennzeichnet, daß** ein Polymer in ihm gelöst ist.

14. Präpolymer nach Anspruch 13, **dadurch gekennzeichnet, daß** als Polymer thermoplastisches Polystyrol oder ein Indenharz dient.

15. Präpolymer nach einem der Ansprüche 1 bis 14, **dadurch gekennzeichnet, daß** in den Monomeren und gegebenenfalls in dem Polymer die Wasserstoffatome ganz oder teilweise durch Fluoratome ersetzt sind.

16. Präpolymer nach einem der Ansprüche 1 bis 15, **dadurch gekennzeichnet, daß** es als Füller anorganische Partikel enthält.

17. Präpolymer nach Anspruch 16, **dadurch gekennzeichnet, daß** es als Füller hydrophobes TiO₂ enthält.

18. Präpolymer nach einem der Ansprüche 2 bis 17, **dadurch gekennzeichnet, daß** es bezogen auf sein Gesamtgewicht etwa 5 bis etwa 95 Gew.-% mindestens eines der genannten linear polymerisierenden Monomere, etwa 0 bis etwa 50 Gew.-% mindestens eines der genannten vernetzenden Monomere, etwa 0 bis etwa 50 Gew.-% eines der genannten Polymere und < etwa 5 Gew.-% eines der genannten Photoinitiatoren enthält.

19. Dielektrisches Material, **dadurch gekennzeichnet, daß** es insbesondere aus dem Präpolymer nach einem der Ansprüche 1 bis 18 durch Polymerisation erzeugt worden ist.

20. Dielektrisches Material nach Anspruch 19, **dadurch gekennzeichnet, daß** gegebenenfalls vorhandenes Lösungsmittel vor der Polymerisation entfernt worden ist.

21. Dielektrisches Material nach Anspruch 19 oder 20 **gekennzeichnet durch** seine Verwendung in Hochfrequenz- und Mikrowellenschaltungen.

22. Dielektrisches Material nach Anspruch 21, **dadurch gekennzeichnet, daß** die Hochfrequenz- und Mikrowellenschaltungen mehrlagig sind.

## Claims

1. Prepolymer, **characterized in that** it contains at least one linear polymerizing monomer and one photoinitiator.

2. Prepolymer according to Claim 1, **characterized in that** the linear polymerizing monomer is styrene.

3. Prepolymer according to Claim 2, **characterized in that** the styrene is completely or partially replaced by at least one linear polymerizing monomer from the group α-methylstyrene, o-, p- and m-vinyltoluene, a mixture of cis- and trans-stilbene, α- and β-pinene, indene, o-, p- and m-methoxystyrene and o-, p- and m-ethylstyrene.

4. Prepolymer according to one of Claims 1 to 3, **characterized in that** the photoinitiator is present in quantities between approximately 0.1 and approximately 5 wt.-%, based on the total weight of the prepolymer.

5. Prepolymer according to one of Claims 1 to 4, **characterized in that** the photoinitiator is a UV initiator.

6. Prepolymer according to one of Claims 1 to 5, **characterized in that** the photoinitiator is an initiator for the radical polymerization.

7. Prepolymer according to Claim 6, **characterized in that** Darocur 1173 or Irgacure 369 is contained as a photoinitiator.

8. Prepolymer according to one of Claims 1 to 7, **characterized in that** it contains at least one cross-linking polymerizing monomer.

9. Prepolymer according to Claim 8, **characterized in that** the cross-linking polymerizing monomer is at least one material from the group divinylbenzene, methylcyclopentadiene, norborna-2,5-diene, indene, α-, β- and γ-terpinene, dipentene and dicyclopentadiene.

10. Prepolymer according to one of Claims 1 to 9, **characterized in that** it contains a stabilizing agent.

11. Prepolymer according to one of Claims 1 to 10, **characterized in that** it contains a solvent.

12. Prepolymer according to Claim 11, **characterized in that** butyl acetate is contained as a solvent.

13. Prepolymer according to one of Claims 1 to 12, **characterized in that** a polymer is dissolved in it.

14. Prepolymer according to Claim 13, **characterized in that** thermoplastic polystyrene or an indene resin is used as a polymer.

15. Prepolymer according to one of Claims 1 to 14, **characterized in that** the hydrogen atoms in the monomers and in the polymer, if necessary, are entirely or partially replaced by fluorine atoms.

16. Prepolymer according to one of Claims 1 to 15, **characterized in that** it contains inorganic particles as a filler.

17. Prepolymer according to Claim 16, **characterized in that** it contains hydrophobic TiO₂ as a filler.

18. Prepolymer according to one of Claims 2 to 17, **characterized in that**, based on its total weight, it contains approximately 5 to approximately 95 wt.-% of at least one of the cited linear polymerizing monomers, approximately 0 to approximately 50 wt.-% of at least one of the cited cross-linking monomers, approximately 0 to approximately 50 wt.-% of one of the cited polymers and less than approximately 5 wt.-% of one of the cited photoinitiators.

19. Dielectric material, **characterized in that** it has been produced in particular by polymerization from the prepolymer according to one of Claims 1 to 18.

20. Dielectric material according to Claim 19, **characterized in that** solvent which may, if necessary, be present is removed before the polymerization.

21. Dielectric material according to Claim 19 or 20, **characterized by** its use in high-frequency and microwave circuits.

22. Dielectric material according to Claim 21,
**characterized in that** the high-frequency and microwave circuits are multilayered.

## Revendications

1. Prépolymère
**caractérisé en ce qu'**
il contient au moins un monomère à polymérisation linéaire et un photoamorceur.

2. Prépolymère selon la revendication 1,
**caractérisé en ce que**
le monomère à polymérisation linéaire est du styrène.

3. Prépolymère selon la revendication 2,
**caractérisé en ce que**
le styrène est entièrement ou en partie remplacé par au moins un monomère à polymérisation linéaire du groupe constitué d'α-méthylstyrène, de o-, p- et m-vinyltoluène, d'un mélange de cis- et trans-stilbène, d'α- et β-pinène, d'indène, de o-, p- et m-méthoxystyrène et de o-, p- et m-éthylstyrène.

4. Prépolymère selon l'une quelconque des revendications 1 à 3,
**caractérisé en ce que**
le photoamorceur est présent en quantités comprises entre environ 0,1 et environ 5 % en poids par rapport au poids total du prépolymère.

5. Prépolymère selon l'une quelconque des revendications 1 à 4,
**caractérisé en ce que**
le photoamorceur est un amorceur d'UV.

6. Prépolymère selon l'une quelconque des revendications 1 à 5,
**caractérisé en ce que**
le photoamorceur est un amorceur de la polymérisation radicalaire.

7. Prépolymère selon la revendication 6,
**caractérisé en ce que**
comme photoamorceur, il contient du Darocur 1173 ou de l'Irgacure 369.

8. Prépolymère selon l'une quelconque des revendications 1 à 7,
**caractérisé en ce qu'**
il contient au moins un monomère à polymérisation réticulante.

9. Prépolymère selon la revendication 8,
**caractérisé en ce que**
le monomère à polymérisation réticulante est au moins une matière constituée du groupe composé de divinylbenzène, de méthylcyclopentadiène, de norborna-2,5-diène, d'indène, d'α-, β et δ-terpinène, de dipentène et de dicyclopentadiène.

10. Prépolymère selon l'une quelconque des revendications 1 à 9,
**caractérisé en ce qu'**
il contient un stabilisateur.

11. Prépolymère selon l'une quelconque des revendications 1 à 10,
**caractérisé en ce qu'**
il contient un solvant.

12. Prépolymère selon la revendication 11,
**caractérisé en ce que**
comme solvant il contient de l'acétate de butyle.

13. Prépolymère selon l'une quelconque des revendications 1 à 12,
**caractérisé en ce qu'**
un polymère y est dissous.

14. Prépolymère selon la revendication 13,
**caractérisé en ce que**
le polymère est du polystyrène thermoplastique, ou une résine d'indène.

15. Prépolymère selon l'une quelconque des revendications 1 à 14,
**caractérisé en ce que**
les atomes d'hydrogène sont entièrement ou partiellement remplacés par des atomes de fluor dans les monomères et, le cas échéant, dans le polymère.

16. Prépolymère selon l'une quelconque des revendications 1 à 15,
**caractérisé en ce que**
comme charge il contient des particules inorganiques.

17. Prépolymère selon la revendication 16,
**caractérisé en ce que**
comme charge il contient du TiO₂ hydrophobe.

18. Prépolymère selon l'une quelconque des revendications 2 à 17,
**caractérisé en ce qu'**
il contient, par rapport à son poids total, environ 5 à environ 95 % en poids d'au moins un des monomères à polymérisation linéaire cités, environ 0 à environ 50 % en poids d'au moins un des monomères réticulants cités, environ 0 à environ 50 % en poids d'un des polymères indiqués et environ moins de 5 % en poids d'un des photoamorceurs indiqués.

19. Matière diélectrique,
**caractérisée en ce qu'**
elle est produite par polymérisation, en particulier à partir du prépolymère selon l'une quelconque des revendications 1 à 18.

20. Matière diélectrique selon la revendication 19,
**caractérisée en ce que**
le solvant éventuellement présent a été retiré avant la polymérisation.

21. Matière diélectrique selon la revendication 19 ou 20,
**caractérisée par**
son utilisation dans des circuits haute fréquence ou à micro-ondes.

22. Matière diélectrique selon la revendication 21,
**caractérisée en ce que**
les circuits haute fréquence et à micro-ondes sont multicouches.
